Europäisches Patentamt

European Patent Office

Office européen des brevets

(11) Numéro de publication: **0 421 945 A2**

# DEMANDE DE BREVET EUROPEEN

(21) Numéro de dépôt: 90830387.8

(22) Date de dépôt: 31.08.90

(51) Int. Cl.⁵: **G02C 13/00**

(30) Priorité: 01.09.89 IT 705489 U

(43) Date de publication de la demande:
10.04.91 Bulletin 91/15

(84) Etats contractants désignés:
AT CH DE ES FR GB IT LI

(71) Demandeur: C.M.S. OPTICAL DIVISION S.r.l.
Via A. Locatelli, 51
I-24019 Zogno (Bergamo)(IT)

(72) Inventeur: Aceti, Pietro
3, Via Raboni
I-24100 Bergamo(IT)

(74) Mandataire: Manzoni, Alessandro
MANZONI & MANZONI - UFFICIO
INTERNAZIONALE BREVETTI P.le Arnaldo n.
2
I-25121 Brescia(IT)

(54) Dispositif porte-pièces pour l'usinage complet de montures de lunettes.

(57) L'invention concerne un dispositif porte-pièce pour une machine destinée au façonnage de montures de lunettes comprenant, en association à au moins une tête opératoire de perçage et fraisage soit intérieur soit extérieur, un corps de support portant sur deux côtés différents un mandrin destiné à la prise de la pièce de départ et à son soutien pendant son façonnage intérieur et des moyens à pinces destinés à la prise de la pièce dégrossie provenant du mandrin et à son soutien pendant son façonnage extérieur, un dispositif de transfert étant prévu pour déplacer la pièce du mandrin aux moyens à pinces.

Fig.1

# DISPOSITIF PORTEPIECES POUR L'USINAGE COMPET DE MONTURES DE LUNETTES

La présente invention concerne, en général, des machines-outils pour la production de montures de lunettes en partant d'une plaque initiale d'une matière appropriée et, plus en particulier, un dispositif porte-pièce pour le façonnage complet de ces montures.

On connaît déjà la construction de montures de lunettes sur machines-outils en partant d'une plaque initiale de matière appropriée, telle qu'une résine, au moyen d'opérations successives de creusement et contour selon un dessin préétabli. Cependant, cette construction comporte une reprise de la pièce entre les façonnages intérieur et extérieur pour donner à la monture la configuration finale, quelquefois en utilisant même deux machins différentes.

Il est par contre objet de la présente invention de proposer un dispositif porte-pièce qui simplifie, facilite et limite les opérations sur une seule machine, en éliminant les transferts et les reprises de la pièce, les temps passifs et l'utilisation de machine complémentaires, chacune pour un usinage spécifique.

Un autre objet de l'invention est donc ce de proposer un dispositif porte-pièce pour une machine-outil qui permette un façonnage complet intérieure et extérieure des montures de lunettes en partant d'une pièce en guise de plaque.

Dans ce but, le dispositif porte-pièce selon l'invention comprend, en association avec au moins une tête à percer et fraiser soit intérieurement soit extérieurement, un corps de support portant, sur deux côtés différents, un mandrin de serrage destiné à la prise de la pièce de départ et à la soutenir pendant son façonnage intérieur et des moyens à pinces destinés à la prise de la pièce livrée par le mandrin et à le soutenir pendant son façonnage extérieur.

Plus de détails de l'invention résulteront plus évidents de la description suivante faite avec référence au dessin ci-joint, purement indicatif et ne pas limitatif, dans lequel:

la Fig. 1 montre une vue schématique d'en haut du dispositif porte-pièce dans une première position par rapport à une tête opératoire;

la Fig. 2 montre une vue comme celle de la Fig. 1, mais avec le dispositif porte-pièce dans une deuxième position;

la Fig. 3 montre une vue du dispositif en direction de la flèche A en Fig. 1; et

la Fig. 4 montre une autre vue du dispositif en direction de la flèche B en Fig. 1;

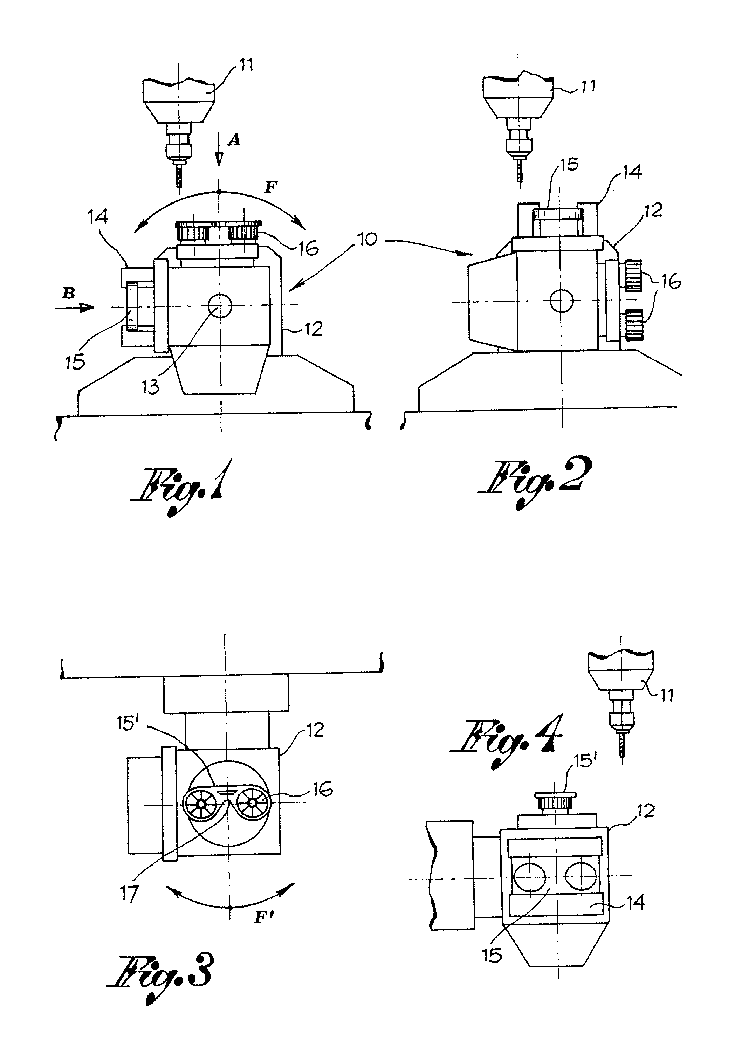

Dans le dessin, le dispositif porte-pièce conforme à l'invention est globalement indiqué par 10 en corrélation à une tête opératoire 11 partiellement représentée et destinée aux opérations de perçage et fraisage.

Le dispositif susdit comprend un corps de support 12, substantiellement prismatique, susceptible au moins de rotations F autour d'un axe 13. Sur un premier côté du corps 12 parallèle à l'axe 13 est monté un mandrin de serrage 14 dont les mâchoires sont opportunement actionnés pour bloquer/débloquer une pièce à plaque 15 qui représente l'élément de départ pour la réalisation d'une monture de lunettes, par exemple.

Sur un autre côté du corps de support 12, préférablement sur un côté contigu à ce portant le mandrin 14, il y a des moyens à pinces expansibles/contractibles 16, opportunement actionnés, susceptibles d'une rotation $F'$ autour de leur axe 17, angulé par rapport à l'axe de rotation 13 du corps 12 et destinés à prendre, bloquer et débloquer la pièce 15 provenant du mandrin 14 après son premier usinage.

Pratiquement, la pièce de départ 15, quand elle a été prise par le mandrin 14, est sujette à un premier usinage au moyen de la tête opératoire pour en exécuter le façonnage soi-disant intérieur et qui n'intéresse pas son profil extérieur. Après ça, la pièce dégrossie est déchargée du mandrin 14, prise par les moyens de transfert et appliquée aux pinces 16 qui par rotation F se sont porté vis-à-vis de la pièce et de la tête opératoire 11. Les pinces 16 prennent la pièce intérieurement, sur les parties déjà façonnées et la pièce peut être usinée et façonnée aussi extérieurement pour son finissage complet sur la même machine, sans reprises et sans temps passifs substantiels.

## Revendications

1.) Dispositif porte-pièce pour une machine destinée au façonnage de montures de lunettes en partant d'une plaque initiale de matière appropriée, **caractérisé** en ce qu'il comprend, en association avec au moins une tête opératoire de perçage et fraisage, soit intérieure soit extérieure, un corps de support (12) portant, sur deux côtés différents, un mandrin de serrage (14) destiné à la prise de la pièce de départ (15) et à la soutenir pendant son façonnage intérieur, et des moyens à pinces (16) destinés à la prise de la pièce dégrossie provenant du mandrin susdit et à la soutenir pendant son façonnage extérieur, un dispositif de transfert étant prévu pour déplacer la pièce du mandrin aux moyens à pinces.

2.) Dispositif porte-pièce selon la revendication 1), **caractérisé** en ce que le mandrin (14) et les moyens à pinces (16) sont montés sur deux côtés contigus du corps de support (12), que le corps susdit est susceptible de rotations (F̄) commandées autour d'un axe (13) parallèle aux côtés portants le mandrin et les moyens à pinces, et en que ces moyens à pinces (16) sont susceptibles de rotations (F′) commandées autour leur axe (17) angulé par rapport à l'axe de rotation du corps de support (12).

3.) Dispositif porte-pièce selon la revendication 1), **caractérisé** en ce que le mandrin (14) et les moyens à pinces (16) sont commandés par des catuateurs placés dans le corps de support.

4.) Dispositif porte-pièce selon les revendications précédentes, **caractérisé** en ce que le mandrin est structuré pour une prise sur l'extérieur de la pièce de départ, tandis que les moyens à pinces (16) sont prévus pour la prise sur des parties intérieures de la pièce après un premier façonnage.

Fig.1

Fig.2

Fig.3

Fig.4